# EUROPÄISCHE PATENTSCHRIFT

(11) **EP 2 709 804 B1**
(45) Veröffentlichungstag und Bekanntmachung des Hinweises auf die Patenterteilung: **14.09.2016**
(21) Anmeldenummer: 12722718.9
(22) Anmeldetag: 18.05.2012
(51) Int. Cl.: B25B 7/02, B25B 7/14, H02G 1/00, H02G 1/12

(54) **ZANGE**
PLIERS
PINCE

(30) Priorität: 20.05.2011 DE 102011050542; 23.08.2011 DE 102011052926
(43) Veröffentlichungstag der Anmeldung: 26.03.2014
(73) Patentinhaber: KNIPEX-WERK C. Gustav Putsch KG, 42349 Wuppertal (DE)
(72) Erfinder: HEINSOHN, Andreas, 42369 Wuppertal (DE)
(74) Vertreter: Müller, Enno
(86) Internationale Anmeldenummer: PCT/EP2012/059242
(87) Internationale Veröffentlichungsnummer: WO 2012/159982

(56) Entgegenhaltungen:
- US-A- 1 361 301
- US-A- 3 831 207
- US-A- 3 947 905
- US-A1- 2003 041 382
- US-A1- 2004 118 251
- US-A1- 2006 005 315

## Beschreibung

Die Erfindung betrifft eine Zange nach den Merkmalen des Oberbegriffes des Anspruches 1.

Zangen als solche sind zunächst beispielsweise in der Form von Seitenschneidern bekannt. Hierzu sei auf die DE 199 42 372 A1 verwiesen. Darüber hinaus sind Zangen auch als sog. Mittenschneider bekannt. Hierzu sei etwa auf die DE 94 06 868 U1 verwiesen. Es ist auch bereits bekannt, an einer Zange maulseitig mehrere Schneidbereich hintereinander auszubilden, siehe etwa DE 196 49 992 C2. Bei letztgenannter Zange handelt es sich in dem maulaußenseitigen Schneidbereich um verdeckte Schneiden. In dem maulinnenseitigen Schneidbereich um eine einseitige Schneide.

Darüber hinaus ist auf die nicht vorveröffentlichten Unterlagen der DE 10 2009 044107 zu verweisen. Bei der in dieser Anmeldung beschriebenen Zange sind die ersten Schneiden aufeinander liegend oder zueinander beabstandet vorgesehen.

Im Weiteren ist zum Stand der Technik auf die US 2004/118251 A1, US 3,947,905 A, US 3,831,207 A und GB 1443913 A zu verweisen.

Ausgehend von dem Jetztgenannten Stand der Technik beschäftigt sich die Erfindung mit der Aufgabenstellung, eine Zange mit maulseitig hintereinander ausgebildeten ersten und zweiten Schneiden anzugeben, die insbesondere eine günstige Draht-/ oder Kabelbearbeitung ermöglicht.

Diese Aufgabe ist beim Gegenstand des Anspruches 1 gelöst, wobei darauf abgestellt ist, dass in einer ersten Öffnungsstellung die ersten Schneiden durch die gegebene Öffnung zugänglich sind, die zweiten aber noch nicht, wobei die zweiten Schneiden als Kabelschere mit einem spitzen Schneidwinkel und zwei Schneiden mit je einer durchgehend kontinuierlich gebogenen Schneidkante ausgebildet sind, und dass die zweiten Schneiden bei geschlossener Zange über ihre gesamte Erstreckung mit unterschiedlichem Ausmaß übereinandeliegen, nämlich gelenkfern mit größerer Überdeckung als gelenknah.

Die ersten Schneiden fahren beim Öffnen der Zange V-förmig auseinander, so dass auch in engen Arbeitsbereichen ein Kabel oder Draht in diesen Bereich der ersten Schneiden gut eingeführt und geschnitten oder beispielsweise abisoliert werden kann. Die daran in Richtung auf das Gelenk anschließenden zweiten Schneiden, die bei geschlossener Zange zumindest teilweise scherenartig übereinander liegen, ermöglichen beispielsweise beim weiteren Vorbewegen der Zange, nachdem eine erste Bearbeitung mit den ersten Schneiden, evtl. im Sinne einer Abisolierung, vorgenommen wurde, das sichere vollständige Durchtrennen evtl. hierbei noch nicht vollständig durchgetrennter Teile. Zum anderen kann aber auch die Zange sogleich vollständig geöffnet werden, so dass ein beispielsweise Draht oder Kabel sogleich bis in den Bereich der zweiten Schneiden vorbelegt werden kann - oder die Zange relativ zu dem Kabel entsprechend bewegt werden kann - und im Sinne einer Kabelschere diese zweiten Schneiden zum vollständigen Durchtrennen des bspw. Drahtes oder Kabels im Zuge der Schließung der Zange genutzt werden können.

Die schneidende Bearbeitung eines Werkstückes kann entsprechend hintereinander unter Vorbewegung der Zange in Richtung auf das Werkstück, oder durch Bewegung des Werkstückes in die Zange hinein, mit unterschiedlicher Bearbeitung vorgenommen werden. Die zweiten Schneiden begünstigen auch eine Stabilität der Zange. Bei Nutzung der ersten Schneiden hindern sie jedenfalls in einer Richtung und bei nicht vollständig geöffneter Zange ein Klaffen quer zur Öffnungsbewegung. Die Ausgestaltung im Bereich der zweiten Schneiden kann auch, etwa durch ineinanderfahrende Profile, so vorgesehen sein, dass das Klaffen in beiden Richtungen quer zu einer Öffnungsebene der Zangenbacken gehindert ist. Bei Nutzung der zweiten Schneiden ergibt sich eine Nutzung in einem wesentlich stabileren Bereich der Zange, da dieser nahe am Gelenk ist.

Die zweiten Schneiden liegen im geschlossenen Zustand der Zange über ein größeres Maß in Öffnungsrichtung der Zange übereinander als gelenkseitig. Insbesondere ist bevorzugt, dass die zweiten Schneiden über ihre gesamte Erstreckung, bezogen auf eine Längserstreckung der Zange, und zwar gegebenenfalls in unterschiedlichem Ausmaß, in der Geschlossenstellung der Zange übereinanderliegen. Die Schneiden können auch im maulseitigen und gelenkseitigen Endbereich mit einer größeren Überdeckung zusammenliegen als in einem mittleren Bereich. In diesem Fall durchläuft die Überdeckung der Schneiden ein Minimum.

Es ist möglich, dass die ersten Schneiden gelenkseitig durch im geschlossenen Zustand der Zange übereinander gefahrene Anschlagelemente begrenzt sind, die entsprechend erst nach Erreichen eines gewissen Öffnungswinkels der Zange den Zugang zu den zweiten Schneiden freigeben. Es ist vorteilhaft, diese Anschlagelemente sogleich integral mit den genannten zweiten Schneiden auszubilden.

Zusätzlich zu den Schneiden-Arbeitsbereichen können auch weitere Arbeitsbereiche vorgesehen sein, die keine Schneidfunktion oder eine sehr spezifische Schneidfunktion ausführen. Insbesondere können solche Arbeitsbereiche zunächst Greif- oder Brennerloch-Arbeitsbereiche sein. Bei einem Brennerloch handelt es sich bekanntlich um den an sich bekannten Bereich einer Kombizange, der im geschlossenen Zustand der Zange eine ovalförmige Öffnung begrenzt und aus im Längs-Querschnitt zackenartigen Bereichen zusammengesetzt ist. Die einen Abisolierbereich bildenden bzw. zur Abisolierung bei Nutzung der Zange zusammenwirkenden Arbeitsbereiche sind bevorzugt, wie angegeben, im Bereich der ersten Schneiden ausgebildet. Dies weiter bevorzugt in Form von Einbuchtungen, bspw. halbkreisförmige Einbuchtungen, die von der Schneidenkante ausgehend sich quer zur Erstreckungsrichtung der Zange erstrecken. Bevorzugt sind an beiden Arbeitsbereichen zwei in Längsrichtung der Zange, hintereinander liegende Einbuchtungen ausgebildet, die jeweils entsprechend gegenüberliegend ausgebildet sind. Insbesondere ist auch bevorzugt, dass derartige Einbuchtungen an den zusammenwirkenden Schneiden sich, bspw. im geschlossenen Zustand der Zange, zu einer Kreisform ergänzen. Hierbei kann auch in einer der Schneiden ein größerer Anteil als ein halbkreisförmiger Teil dieser zusammengefassten Kreisform und in der anderen Schneide ein kleinerer Teil ausgebildet sein.

Die zur Abisolierung dienenden zusammenwirkenden Arbeitsbereiche der Zange belasten auch bevorzugt im geschlossenen Zustand der Zange, weiter bevorzugt jeder der mehreren in Längsrichtung der Zange hintereinander ausgebildeten Arbeitsbereiche, eine Öffnung. Diese Öffnungen können bei den mehreren Abisolierbereichen unterschiedlich groß sein. Die einen Abisolierbereich bildenden Schneiden sind entsprechend nur außerhalb der genannten Öffnungen im geschlossenen Zustand der Zange in Überdeckung.

Insbesondere das Brennerloch und/ oder das Greifmaul und/ oder in Form einer Crimpstelle zusammenwirkende Arbeitsbereiche sind maulseitig der zweiten und weiter bevorzugt maulseitig der ersten Schneiden ausgebildet.

Auch ist insbesondere bevorzugt, dass hiermit an einer Zange die Kombination von Kabelschere, mindestens einem Abisolierloch, Crimpstelle, Brennerloch und Greifmaul, zusammen und bevorzugt auch in der genannten Abfolge, gesehen von dem Gelenk in Richtung zum freien Ende des Zangenmauls, auf einer Seite des Gelenkes, ausgebildet sind. Die Kabelschere weist einen spitzen Schneidwinkel und eine oder zwei konkav geschliffene Schneiden auf. Beide bevorzugt mit einer gebogenen Schneidkante, die weiter bevorzugt vorne, maulseitig, eine deutlich größere Überdeckung aufweist als gelenkseitig.

Eine weitere Lehre der Erfindung geht dahin, dass die Zangenschenkel einerseits in eine Öffnungsstellung durch eine Feder vorgespannt sind, andererseits ein Feststellelement vorgesehen ist, das einmal in eine Öffnungsstellung zu bewegen ist, in der also eine maximale Öffnung der Zange ermöglicht ist und zum anderen in eine Geschlossenstellung. Die Geschlossenstellung entspricht jedoch nicht dem Aufeinanderliegen der Arbeitsbereiche oder der vollständig übereinander gefahrenen Stellung von Arbeitsbereichen, sondern einer gewissen ersten Öffnungsstellung. Diese gewisse erste Öffnungsstellung ist so gewählt, dass bei der hier betroffenen Zange mit zwei hintereinander ausgebildeten Schneidbereichen der erste Schneidbereich durch die gegebene Öffnung zugänglich ist, der zweite aber noch nicht.

Die dem Gelenk entfernteren Arbeitsbereiche weisen bei geschlossener Zange in Öffnungsrichtung aufeinanderliegende oder zueinander beabstandete erste Schneiden auf und die dem Gelenk näherliegenden Arbeitsbereiche bei geschlossener Zange scherenartig übereinander gefahrene zweite Schneiden. Die ersten Schneiden können hierbei insbesondere in Gestaltung entsprechend einem Seitenschneider oder einem Mittenschneider ausgebildet sein. Sie fahren beim Öffnen der Zange V-förmig auseinander, so dass auch in engen Arbeitsbereichen ein Kabel oder Draht in üblicher Weise gut geschnitten werden kann. Die daran anschließenden zweiten Schneiden, die bei geschlossener Zange zumindest teilweise scherenartig übereinander liegen, ermöglichen beispielsweise bei weiterem Vorbewegen der Zange, nachdem ein erstes Abschneiden mit den ersten Schneiden vorgenommen wurde, das sichere vollständige Durchtrennen evtl. hierbei noch nicht vollständig durchtrennter Teile. Die schneidende Bearbeitung eines Werkstückes kann also hintereinander unter weiterer Vorbewegung der Zange in Richtung auf das Werkstück, oder Bewegung des Werkstücks in die Zange hinein, mit unterschiedlicher Bearbeitung vorgenommen werden. Die zweiten Schneiden begünstigen auch eine Stabilität der Zange. Bei Nutzung der ersten Schneiden hindern sie ein Klaffen quer zur Öffnungsbewegung jedenfalls in einer Richtung und bei nicht vollständig geöffneter Zange. Die Ausgestaltung im Bereich der zweiten Schneide, etwa durch ineinanderfahrende Profile, kann auch so vorgesehen sein, dass das Klaffen zu beiden Richtungen gehindert ist. Bei Nutzung der zweiten Schneiden ergibt sich eine Nutzung in einem wesentlich stabileren Bereich der Zange, da nahe am Gelenk.

Zusätzlich zu den Schneiden-Arbeitsbereichen können auch weitere Arbeitsbereiche vorgesehen sein, die keine Schneidfunktion oder eine sehr spezifische Schneidfunktion ausführen. Insbesondere zunächst Greif- oder Brennerloch-Arbeitsbereiche. Bei einem Brennerloch handelt es sich um den Bereich einer Kombizange, der im geschlossenen Zustand der Zange eine ovalförmige Öffnung begrenzt und aus im Querschnitt zackenartigen Bereichen zusammengesetzt ist. Darüber hinaus können auch Arbeitsbereiche vorgesehen sein, die bspw. einen Abisolierbereich bilden. Solche können gesondert vorgesehen sein oder in die ersten Schneiden integriert sein. Dies in Form von im geschlossenen Zustand sich zu einer geschlossenen Form ergänzenden Abisolierausnehmungen in dem jeweiligen Arbeitsbereich.

Die genannten weiteren Arbeitsbereiche sind bevorzugt maulseitig der die ersten Schneiden bildenden Arbeitsbereiche ausgebildet.

Nachstehend ist die Erfindung des Weiteren anhand der beigefügten Zeichnungen, die jedoch lediglich ein Ausführungsbeispiel darstellen, erläutert. Hierbei zeigt:
- Fig.1: eine Draufsicht auf eine Zange, in geschlossener Stellung, vorderer Bereich;
- Fig. 2: eine Darstellung gemäß Fig. 1, in teilweise geöffneter Stellung;
- Fig. 3: eine Darstellung gemäß Fig. 1 bzw. Fig. 2, bei vollständig geöffneter Stellung;
- Fig. 4: einen Querschnitt durch den Gegenstand gemäß Fig. 1, geschnitten entlang der Linie IV-IV;
- Fig. 5: einen Querschnitt durch den Gegenstand gemäß Fig. 1, geschnitten entlang der Linie V-V;
- Fig. 6: eine Darstellung der Zange in der Geschlossenstellung (leichte Spreizung);
- Fig. 7: eine Seitenansicht der Zange, insbesondere im Bereich des Feststellelementes;
- Fig. 8: eine weitere Darstellung bzgl. des Feststellelementes; und
- Fig. 9-15: Zangen weiterer Ausführungsformen.

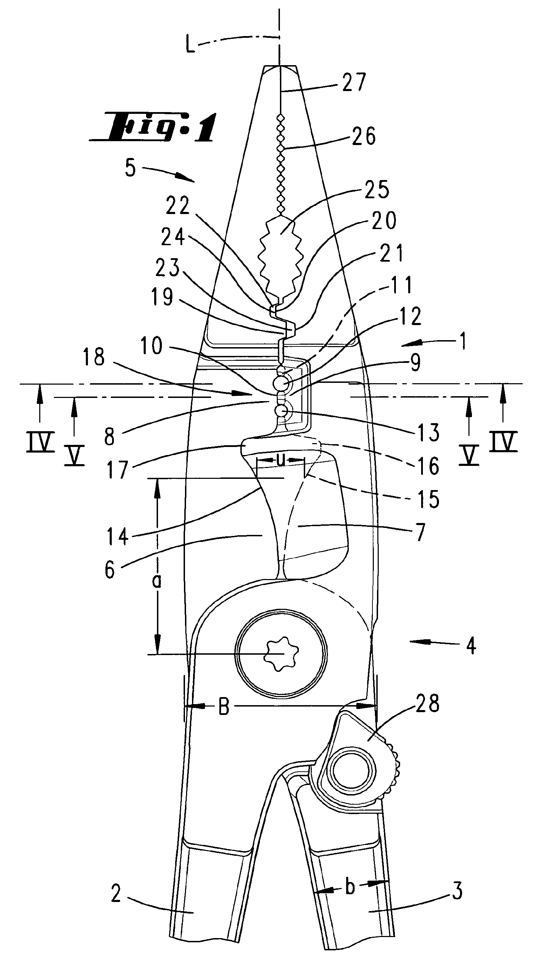

Dargestellt und beschrieben ist, zunächst mit Bezug zu Fig. 1, eine Zange 1, die zwei, hier nur teilweise dargestellte, Zangenschenkel 2, 3 aufweist, die in einem Gelenkbereich 4 drehbar zueinander gehaltert sind. Die Zangenschenkel 2, 3 bilden auf der einen Seite des Gelenks Griffabschnitte aus und auf der anderen Seite des Gelenks einen Maulbereich 5. Der Maulbereich 5 weist im Einzelnen hintereinander, d.h. bezogen auf eine Längslinie L-L nacheinander ausgebildete, unterschiedliche Schneidausbildungen auf. Diese Schneidausbildungen sind jeweils von zwei zusammenwirkenden, an dem Zangenschenkel 2 bzw. 3 entsprechend gegenüberliegend ausgebildeten Arbeitsbereichen 6, 7 und 8, 9 gebildet.

Die dem Gelenk entfernteren Arbeitsbereiche 8, 9 bilden erste Schneiden 10,11 aus, die bei geschlossener Zange bezogen auf die in Fig. 1 dargestellte Geschlossenstellung der Zange 1 übereinanderfahren. Bei dem konkreten Ausführungsbeispiel ist insofern ein Abisolierbereich ausgebildet, mit zwei Abisolieröffnungen 12,13. Die Abisolieröffnungen sind in der geschlossenen Stellung ersichtlich kreisförmig. Hierbei sind größere Anteile der Kreisform durch eine Einbuchtung in der Schneide 10 und kleinere Anteile der Einbuchtung in der Schneide 11 ausgebildet. Dies bezogen auf das konkret dargestellte Ausführungsbeispiel. Die Verhältnisse können auch gleichgewichtig sein bzw. der größere Anteil in der Schneide 11 und der kleinere Anteil in der Schneide 10 ausgebildet.

Die gelenknäheren Arbeitsbereiche 6, 7 bilden zweite Schneiden 14, 15 aus, die bei geschlossener Zange scherenartig übereinander gefahren sind (siehe gestrichelte Darstellung der Schneide 15 in Fig.1).

Die zweiten Schneiden 14,15 weisen hierbei bezogen auf einen Abstand a von dem Gelenk bzw. Gelenkbereich 4 ein unterschiedliches Überdeckungsmaß u auf. Das Überdeckungsmaß u ist bevorzugt maulseitig größer als gelenkseitig.

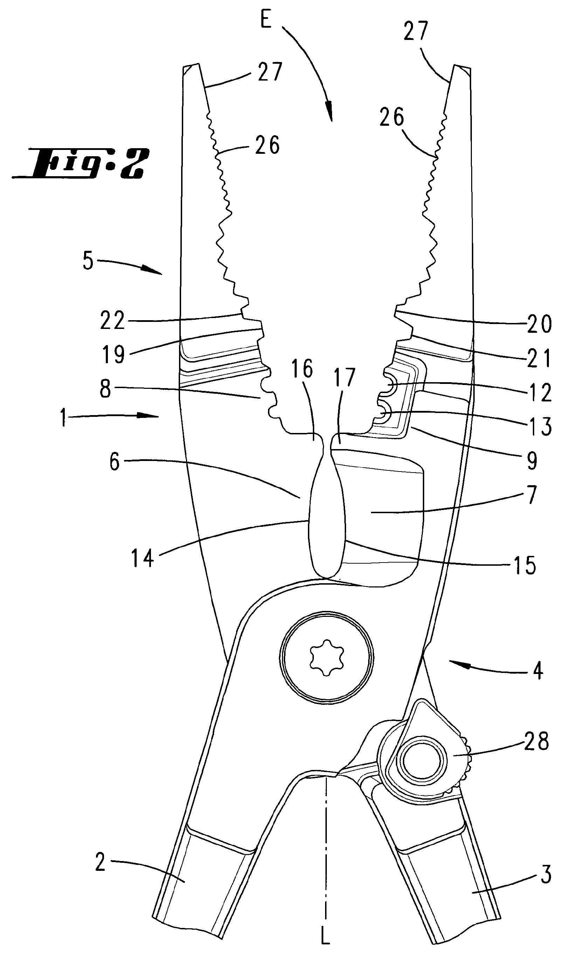

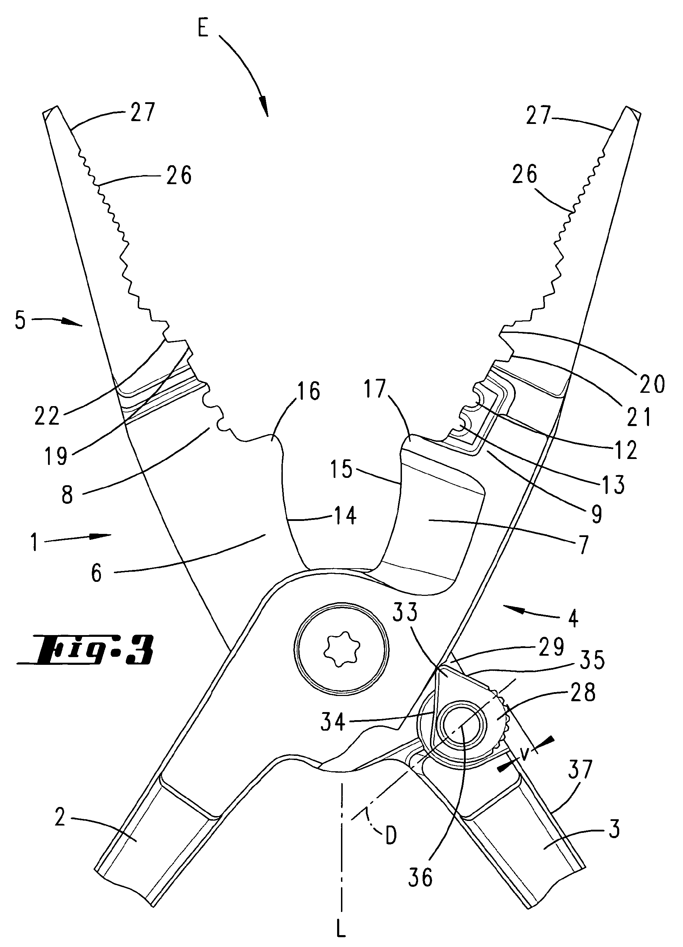

Beim Öffnen der Zange 1, siehe etwa Fig. 2, bilden spitzenseitige Abschnitte 16, 17 der Arbeitsbereiche 6, 7 eine Begrenzung hinsichtlich eines Einführbereiches E für ein Werkstück betreffend die Arbeitsbereiche 8, 9. Bei weiterer Öffnung, siehe etwa Fig. 3, in Öffnungsrichtung lassen diese Abschnitte 16 und 17 sodann das Durchstecken oder Durchdrücken eines Werkstücks, bspw. eines Kabels, zu den Schneiden 14,15 zu. Hiervon nicht betroffen ist die Möglichkeit, eine teilweise geöffnete Zange 1 von oben bezüglich der Schneiden 14,15, mit einer Bewegung quer zu einer Verschwenkebene der Schneiden 14,15, auf ein Werkstück, etwa einen abzuschneidenden Draht oder ein abzuisolierendes Kabel, aufzuschieben oder das Werkstück oder den Draht oder das Kabel durch die bei teilweiser Öffnung der Zange durch die Schneiden 14, 15 freigegebene Öffnung hindurchzuführen.

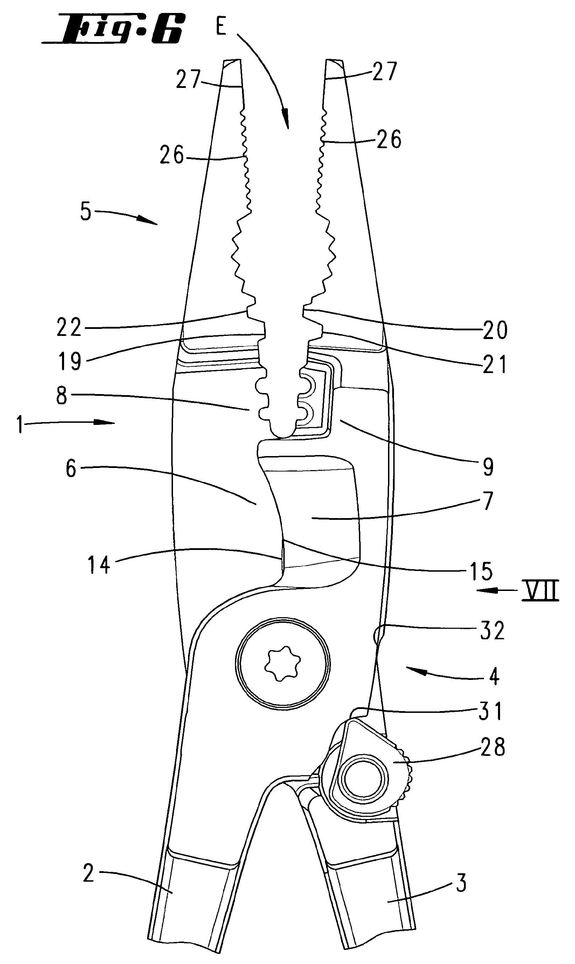

Weiter ist ein Drehverrastungsteil 28 vorgesehen, mit dem die geschlossene Stellung der Zange gemäß Fig. 6 oder die vollständig geöffnete Stellung der Zange, etwa gemäß Fig. 3, erreicht werden kann. Die genannte Geschlossenstellung zeichnet sich dadurch aus, dass gleichwohl eine gewisse Öffnung da ist, die einen Zugang zu dem Crimpbereich und/oder den ersten Schneiden ermöglicht.

Bezüglich des Drehverrastungsteils als solchem wird insbesondere auch Bezug genommen auf die nicht vorveröffentlichten Unterlagen der deutschen Patentanmeldung 10 2010 000 558. Der Offenbarungsgehalt dieser Anmeldung wird hiermit vollinhaltlich in die Offenbarung vorliegender Anmeldung, auch zum Zwecke, Merkmale dieser älteren Anmeldung in Ansprüche vorliegender Anmeldung aufzunehmen, mit einbezogen.

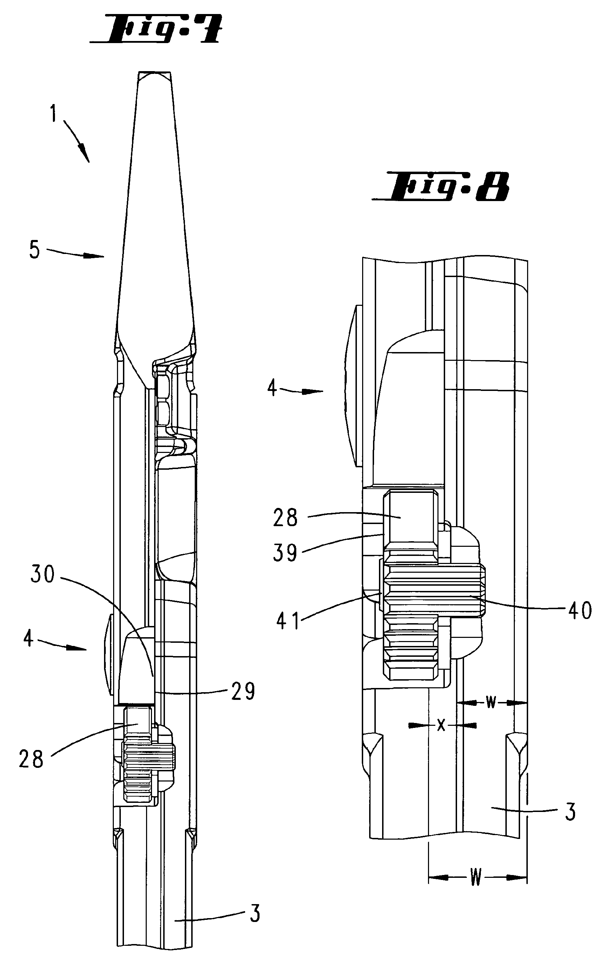

Der Zangenschenkel 3 wie auch der Zangenschenkel 2 bilden im Gelenkbereich aufeinandergleitende Plattenbereiche 29, 30 aus, siehe auch Fig. 7. Diese sind gegenüber einer mittleren Breite b eines Zangenschenkels 2 bzw. 3 mit einer deutlich größeren Breite B gebildet. Die Breite B entspricht etwa dem 1,5- bis 3-fachen der Breite b.

Das Drehverriegelungsteil 28 ist auf einem Zangenschenkel drehbar befestigt, hier dem Zangenschenkel 3. Die Befestigungsstelle, hier als Drehachse gebildet, ist im Übergangsbereich des Zangenschenkels 3 in den Plattenbereich dieses Zangenschenkels angeordnet. Die Abstützung an dem anderen Zangenschenkel 2 erfolgt sowohl in der Öffnungsstellung wie in der Geschlossenstellung an dem Plattenbereich 30 des Zangenschenkels 2.

Wie insbesondere aus einem Vergleich der Fig. 3 und 6 hervorgeht, bildet der Zangenschenkel 2 sowohl eine Verriegelungsfläche 31 wie eine Verriegelungsfläche 32 aus zur Festsetzung der Zange in einer (annähernd) Geschlossenstellung, Fig. 6, wie auch zur Begrenzung einer Öffnungsstellung der Zange, Fig. 3. Die Öffnungsstellung der Zange kann auch anderweitig begrenzt sein. Insofern ist ggf. auch die Anschlagfläche 32 verzichtbar.

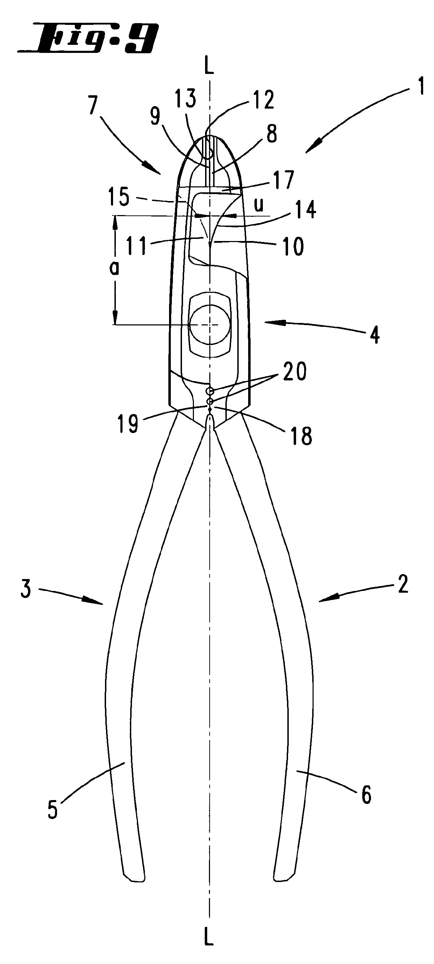

Das Drehverriegelungsteil 28 kann hinsichtlich seiner Drehbeweglichkeit anschlagbegrenzt sein. Dies kann schon durch die Geometrie des Plattenteils 29 und/oder 30 gegeben sein. Eine andere Möglichkeit ist weiter unten mit Bezug zu Fig. 9 erläutert.

Die Anschlagfläche ist beim Ausführungsbeispiel durch einen Spitzenbereich 33 des Drehverriegelungsteils 28 gegeben. Dieser Spitzenbereich 33 ist zufolge einer sekantenartig verlaufenden Begrenzungsfläche 34 und einer im Wesentlichen tangential verlaufenden weiteren Begrenzungsfläche 35, in deren Schnittbereich, gegeben. Im Hinblick auf eine Durchmesserlinie D ist die senkrechte Projektion der Fläche 34 seitlich versetzt, aber innerhalb eines durch die Abmessung des kreisförmigen Abschnitts des Drehverriegelungsteils 28, wie er durch den Durchmesser entlang der Durchmesserlinie D gegeben ist, zu einer Drehachse 36 des Drehverriegelungsteils 28 ausgebildet, in diesem Sinne eben sekantenartig verlaufend. Die Durchmesserlinie D ist hierbei so gewählt, dass sie die Fläche 34 nicht schneidet.

Im Weiteren ist das Drehverriegelungsteil 28 einer Außenrandkante 37 des Zangenschenkels 3 zugeordnet angeordnet. Und zwar derart, dass es durch einen an der Außenrandkante 37 anliegenden bzw. in Längsrichtung des Zangenschenkels 3 gleitenden Fingers einer menschlichen Hand drehend betätigbar ist.

In weiterer Einzelheit ist zu erkennen, dass beim Ausführungsbeispiel das Drehverriegelungsteil 28 über ein Maß v über die Außenrandkante 37 vorsteht. Das Maß v kann je nach Drehstellung des Drehverriegelungsteils 28 auch unterschiedlich sein.

Das Maß v ist bevorzugt relativ klein. Es entspricht weiter bevorzugt ¹/₁₀ bis 5 mm.

Das Drehverriegelungsteil 28 kann aber auch fluchtend mit der Außenrandkante 37 angeordnet sein oder sogar, weiter bevorzugt, bspw. innerhalb eines gleichen Abstandsbereiches wie vorstehend beschrieben, nach innen versetzt zu der Außenrandkante 37 vorgesehen sein.

Im Einzelnen ist ersichtlich, dass das Drehverriegelungsteil 28 grundsätzlich als Einstellrad gebildet ist. Bezüglich der geometrischen Drehachse 36 ergeben sich über den Umfang unterschiedlich weit vorstehende Bereiche, so dass in dieser Hinsicht auch von einem Exzenterteil zu sprechen ist.

Das Drehverriegelungsteil 28, in Form des hier dargestellten Einstellrades, weist weiter umfangsseitig eine Rändelung 38 auf. Die Rändelung 38 ist nur über einen Teilbereich des Umfangs, der in der jeweiligen Stellung der Außenrandkante 37 zugeordnet ist, ausgebildet.

Wie sich insbesondere aus der Schnittdarstellung Fig. 8 ergibt, ist das Drehverriegelungsteil 28 im Bereich des Zangenschenkels 3 angeordnet, der mit einer geringeren Dicke w gegenüber der insbesondere im Griffbereich ausgebildeten Dicke W des Zangenschenkels gestaltet ist. Die Dicke w entspricht ¼ bis ¾ der Dicke W, wobei in diesem Bereich auch alle Zwischenwerte insbesondere in ¹/₁₀ Dicke Schritten, sowohl zu Bereichsverringerungen von oben und/oder wie auch zur Darstellung singulärerer Werte in dem Bereich hiermit in die Offenbarung eingeschlossen sind.

Darüber hinaus ist auch von Bedeutung, dass das Drehverriegelungsteil 28, das am Übergang oder innerhalb des Plattenteils des Zangenschenkels 3 angeordnet ist, in diesem Plattenteil nochmals in einer Absenkung X, vergleiche Fig. 8, angeordnet ist. Ein Teil seiner Höhe ist daher, in einer Projektion von der Seite, innerhalb des Höhenbereichs des Plattenteils des Zangenschenkels 3 angeordnet. Die Oberfläche 39 ist gegenüber der zugeordneten Oberfläche des Zangenschenkels 2 abgesenkt.

In weiterer Einzelheit ist beim Ausführungsbeispiel das Drehverriegelungsteil 28 mit einer in dem Plattenteil des Zangenschenkels 3 verankerten, feststehenden Drehachse 40 gebildet, um welche drehend das Drehverriegelungsteil 28 verstellbar ist. Die Drehachse 40 ist in dem Plattenteil des Zangenschenkels 3 vorzugsweise klemmgehaltert. Durch den gegenüber dem Durchmesser der Drehachse vergrößerten Achsenkopf 41 ist die Formschlusshalterung des hier als Rad ausgebildeten Drehverriegelungsteils 28 erreicht.

Zur Festlegung der (zumindest teilweisen) Geschlossenstellung der Zange weist das Drehverriegelungsteil 28 einen über den Umfang der Kreisform im Rändelbereich hinausragenden spitzen Bereich 33 auf.

Im Anschluss an die ersten und zweiten Schneiden schließt sich maulseitig ein Crimpbereich 18 an. Dieser ist durch zwei Crimpvorsprünge 19 und 20 gekennzeichnet, die in Längsrichtung L nebeneinander, in entsprechende Crimpausnehmungen 21 und 22 des jeweils gegenüberliegenden Arbeitsbereiches in geschlossenem Zustand der Zange wie ersichtlich eingefahren sind. Dies unter Belassung einer Öffnung 23 bzw. 24 spitzenseitig eines Crimpvorsprungs 19 und/ oder 20. Ein Crimpvorsprung 19 selbst kann, wie auch dargestellt, spitzenseitig stumpf ausgebildet sein. Bevorzugt mit einer etwa parallel zur Längserstreckung der Zange verlaufenden Abschlussfläche.

Danach schließt sich bevorzugt ein Brennerloch 25 an. Spitzenseitig schließt sich eine profilierte Greiffläche 26 und/oder, im Falle von "und" bevorzugt in Richtung zum freien Maulende danach noch eine glatte Greiffläche 27 an. Die Greifflächen 26, 27 sind durch gleich ausgebildete gegenüberliegende entsprechende Arbeitsbereiche gebildet.

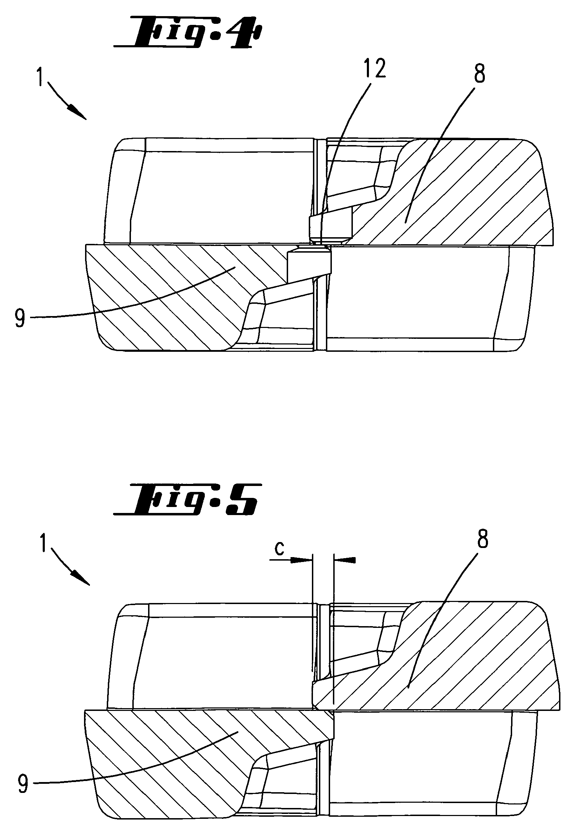

In den Figuren 4 und 5 ist die Überdeckungsausformung im Bereich der ersten Schneidenarbeitsbereiche bzw. Schneiden 8, 9 in weitere Einzelheit dargestellt. Es ist ersichtlich, dass ein Bereich c bei geschlossener Zange gegeben ist, indem die Bereiche übereinandergefahren sind. Dies bei stumpfer Ausbildung der freien Randkanten. Im Bereich einer Abisolieröffnung 12, siehe Fig. 4, ergibt sich Abisolieröffnung ersichtlich durch die projizierte Übereinanderlage der diesbezüglich gestaltete Schneidenbereiche. Das Überdeckungsmaß c entspricht bevorzugt einer Hälfte bis zum beispielsweise 5-fachen eines Durchmessers oder größten Öffnungsmaßes in Öffnungsrichtung der Zangenbacken einer Abisolieröffnung 12.

Die Figuren 6 bis 8 zeigen weitere Einzelheiten der Zange, insbesondere im Hinblick auf das Drehverrastungsteil bzw. Drehfeststellungsteil 28.

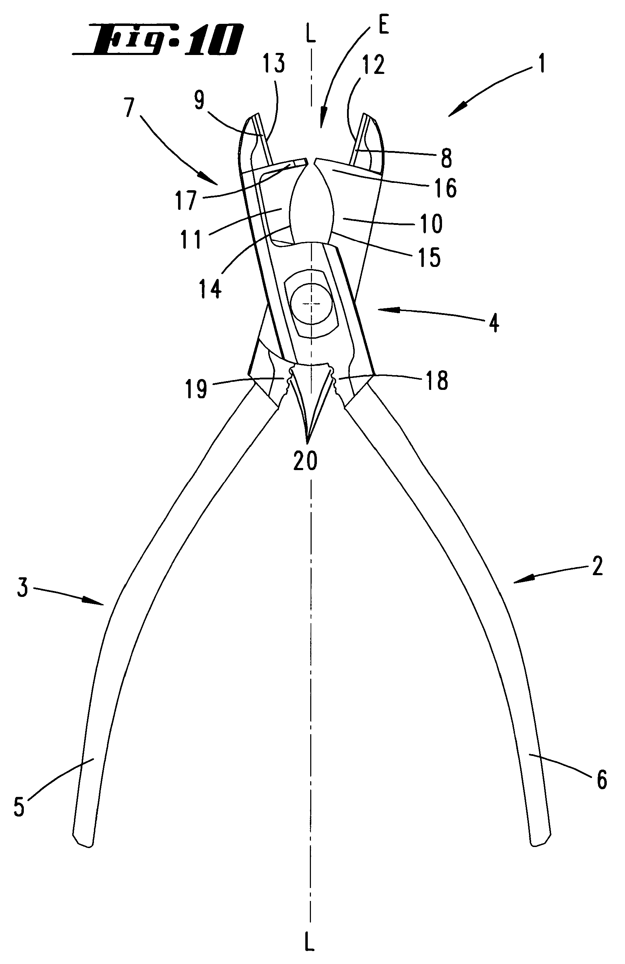

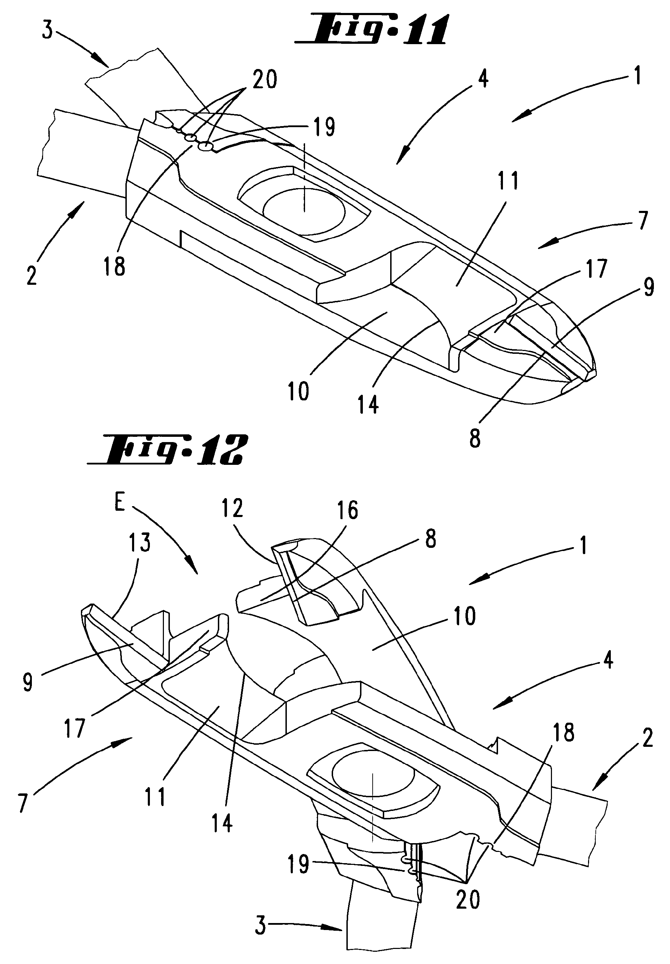

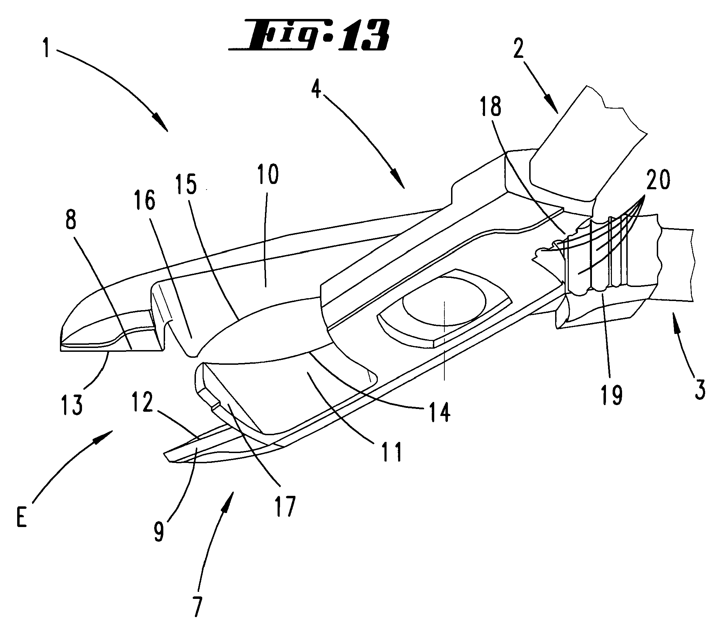

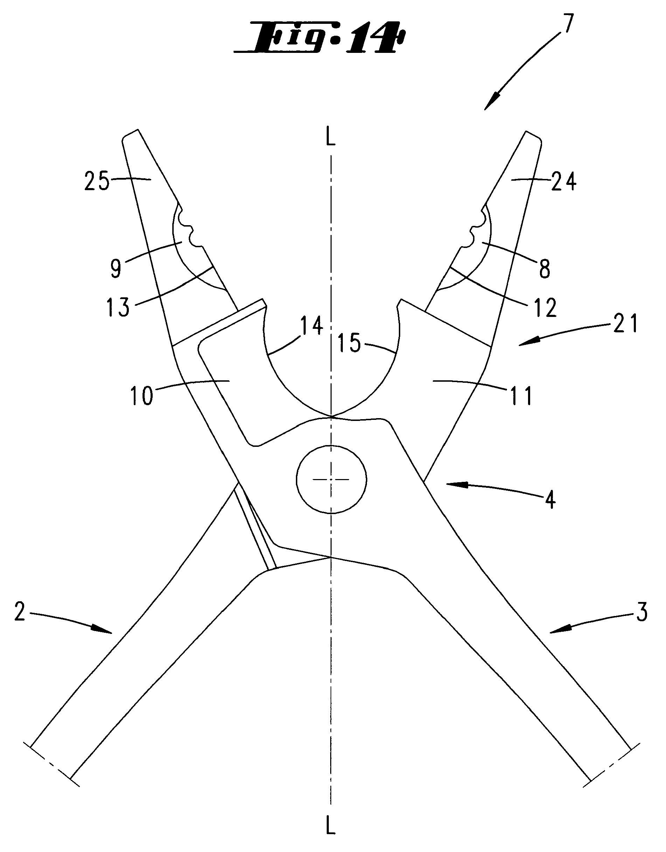

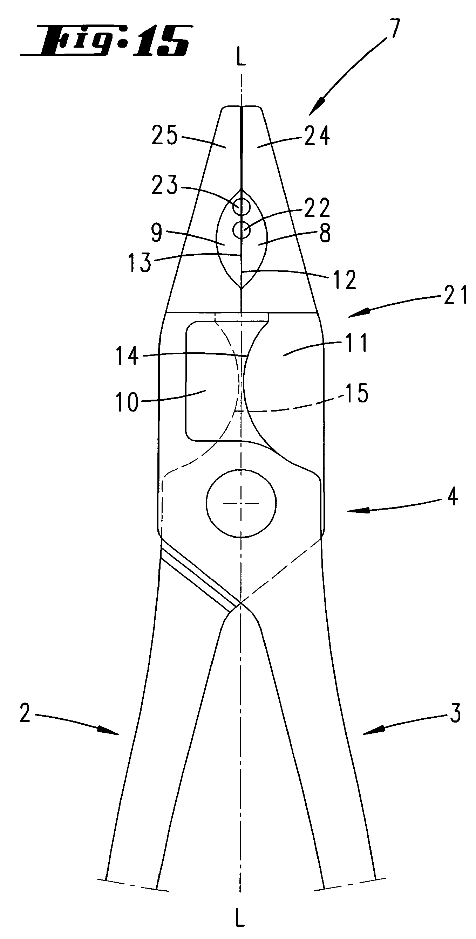

Hinsichtlich der Ausführungsformen der Fig. 9 bis 15 wird vollinhaltlich, auch in Hinblick auf die dort formulierten Ansprüche, auf die Unterlagen der deutschen Patentanmeldung 10 2009044107 Bezug genommen, die mit in die Offenbarung vorliegender Anmeldung mit eingeschlossen sind.

**Bezugszeichenliste**

| | | | |
|---|---|---|---|
| 1 | Zange | 26 | Greiffläche |
| 2 | Zangenschenkel | 27 | Greiffläche |
| 3 | Zangenschenkel | 28 | Drehverrastungsteil |
| 4 | Gelenkbereich | 29 | Plattenteil |
| 5 | Maulbereich | 30 | Plattenteil |
| 6 | Arbeitsbereich | 31 | Verriegelungsfläche |
| 7 | Arbeitsbereich | 32 | Anschlagfläche |
| 8 | Arbeitsbereich | 33 | Spitzenbereich |
| 9 | Arbeitsbereich | 34 | Begrenzungsfläche |
| 10 | erste Schneide | 35 | Begrenzungsfläche |
| 11 | erste Schneide | 36 | Drehachse |
| 12 | Abisolieröffnung | 37 | Außenrandkante |
| 13 | Abisolieröffnung | 38 | Rändelung |
| 14 | zweite Schneide | 39 | Oberfläche |
| 15 | zweite Schneide | 40 | Drehachse |
| 16 | spitzenseitiger Abschnitt | 41 | Achsenkopf |
| 17 | spitzenseitiger Abschnitt | | |
| 18 | Crimpbereich | B | Breite |
| 19 | Crimpvorsprung | b | Breite |
| 20 | Crimpvorsprung | c | Überdeckungsmaß |
| 21 | Crimpausnehmung | D | Durchmesserlinie |
| 22 | Crimpausnehmung | W | Dicke |
| 23 | Öffnung | w | Dicke |
| 24 | Öffnung | v | Maß |
| 25 | Brennerloch | X | Absenkung |

## Patentansprüche

1. Zange (1) mit zwei Zangenschenkeln (2, 3), die in einem Gelenkbereich (4) drehbar zueinander gehaltert sind, wobei die Zangenschenkel (2, 3) auf einer Seite des Gelenks einen Maulbereich (5) und auf der anderen Seite des Gelenks Griffabschnitte ausbilden, wobei weiter der Maulbereich hintereinander ausgebildete unterschiedliche Schneidausbildungen aufweist, die jeweils von zwei zusammenwirkenden, an dem einen und dem anderen Zangenschenkel (2, 3) ausgebildeten Arbeitsbereichen (6, 7, 8, 9) gebildet sind, wobei die dem Gelenk entfernteren Arbeitsbereiche (8, 9) zum möglichen abisolierenden Eingriff zusammenwirkend ausgebildete erste, bei geschlossener Zange zumindest teilweise in Überdeckung befindliche Schneiden (10, 11) aufweisen und die dem Gelenk näher liegenden Arbeitsbereiche (6, 7) bei geschlossener Zange scherenartig übereinandergefahrende zweite Schneiden (14,15) aufweisen, wobei darüber hinaus die zweiten Schneiden (14, 15) maulseitig über ein größeres Maß in Öffnungsrichtung der Zange übereinander liegen als gelenkseitig, wobei in einer ersten Öffnungsstellung die ersten Schneiden (10,11) durch die gegebene Öffnung zugänglich sind, die zweiten Schneiden (14, 15) aber noch nicht, **dadurch gekennzeichnet, dass** die zweiten Schneiden (14, 15) als Kabelschere mit einem spitzen Schneidwinkel und zwei Schneiden mit je einer durchgehend kontinuierlich gebogenen Schneidkante ausgebildet sind, und dass die zweiten Schneiden bei geschlossener Zange über ihre gesamte Erstreckung mit unterschiedlichem Ausmaß übereinander liegen, nämlich gelenkfern mit einer größeren Überdeckung als gelenknah.

2. Zange nach Anspruch 1, **dadurch gekennzeichnet, dass** die Überdeckung der zweiten Schneiden (14,15) in Längsrichtung der Zange (1) ein Minimum durchläuft.

3. Zange nach einem der vorhergehenden Ansprüche, **dadurch gekennzeichnet, dass** eine oder beide der ersten Schneiden (10,11) mit einer oder mehreren Abisoliereinbuchtungen ausgebildet sind.

4. Zange nach einem der vorhergehenden Ansprüche, **dadurch gekennzeichnet, dass** die ersten Schneiden (10, 11) bei geschlossener Stellung der Zange, vorzugsweise mit Ausnahme des Bereiches einer Abisoliereinbuchtung, scherenartig übereinander gefahren sind.

5. Zange nach einem der vorhergehenden Ansprüche, **dadurch gekennzeichnet, dass** die Zange (1) zusätzlich zu den Schneiden-Arbeitsbereichen weitere Arbeitsbereiche wie Greif-, Brennerloch- oder Abisolierarbeitsbereiche aufweist.

6. Zange nach einem der vorhergehenden Ansprüche, **dadurch gekennzeichnet, dass** weitere Arbeitsbereiche maulseitig der die ersten Schneiden (10, 11) bildenden Arbeitsbereiche ausgebildet sind.

## Claims

1. Pliers (1) comprising two plier legs (2, 3) which are rotatably mounted relative to one another in a joint region (4), the plier legs (2, 3) forming a mouth region (5) on one side of the joint and gripping portions on the other side of the joint, the mouth region also comprising various cutting formations which are arranged one behind the other and are each formed by two interacting working regions (6, 7, 8, 9) formed on each plier leg (2, 3), the working regions (8, 9) further away from the joint comprising first cutting edges (10, 11) which are designed to interact for possible stripping engagement and overlap at least in part when the pliers are closed, and the working regions (6, 7) that are closer to the joint comprising second cutting edges (14, 15) which are moved one on top of the other in the manner of shears when the pliers are closed , the second cutting edges (14, 15) also being one on top of the other in the opening direction of the pliers to a greater extent on the mouth side than on the joint side, the first cutting edges (10, 11) being accessible in a first opening position via the available opening, this not yet being the case for the second cutting edges (14, 15), however, **characterised in that** the second cutting edges (14, 15) are formed as cable shears having an acute cutting angle and two cutting edges each comprising a continuously curved cutting edge, and **in that**, when the pliers are closed, the second cutting edges are arranged one on top of the other over the entire extension thereof to varying degrees, more specifically, there is a greater overlap in the region remote from the joint than close to the joint.

2. Pliers according to claim 1, **characterised in that** the two cutting edges (14, 15) overlap to a minimum degree in the longitudinal direction of the pliers (1).

3. Pliers according to any of the preceding claims, **characterised in that** one or both of the first cutting edges (10, 11) are formed having one or more stripping notches.

4. Pliers according to any of the preceding claims, **characterised in that**, when the pliers are in the closed position, the first cutting edges (10, 11), preferably except for the region of a stripping notch, are moved one on top of the other in the manner of shears.

5. Pliers according to any of the preceding claims, **characterised in that**, in addition to the cutting working regions, the pliers (1) also comprise additional working regions, for example gripping working regions, burner-hole working regions, or stripping working regions.

6. Pliers according to any of the preceding claims, **characterised in that** additional working regions are formed on the mouth side of the working regions which form the first cutting edges (10, 11).

## Revendications

1. Pince (1) avec deux branches (2, 3) maintenues ensemble de manière pivotante dans une zone d'articulation (4), dans laquelle les branches (2, 3) forment d'un côté de l'articulation une zone de mâchoires (5) et de l'autre côté de l'articulation des poignées, dans laquelle en outre la zone de mâchoires présente différentes formations coupantes disposées de manière consécutive, lesquelles sont à chaque fois formées de deux zones de travail (6, 7, 8, 9) formées à l'une et à l'autre des branches (2, 3) et coopérant ensemble, dans laquelle les zones de travail (8, 9) les plus éloignées de l'articulation présentent des premières lames (10, 11) qui se chevauchent au moins partiellement lorsque la pince est fermée et coopérant ensemble pour réaliser potentiellement une opération de dénudage et les zones de travail (6, 7) plus proches de l'articulation présentent des deuxièmes lames (14, 15) passant l'une sur l'autre à la façon de ciseaux lorsque la pince est fermée, dans laquelle en outre les deuxièmes lames (14, 15) se chevauchent suivant la direction d'ouverture de la pince sur une plus grande étendue du côté vers les mâchoires que du côté vers l'articulation, dans laquelle dans une première position d'ouverture les premières lames (10, 11) sont accessibles par l'ouverture donnée, mais pas encore les deuxièmes lames (14, 15), **caractérisée en ce que** les deuxièmes lames (14, 15) sont formées en tant que cisaille coupe-câble ayant un angle de coupe aigu et deux lames de coupe formant chacune une arête de coupe continuellement courbe sur toute sa longueur, et que les deuxièmes lames se chevauchent avec un degré différent sur toute leur extension lorsque la pince est fermée, à savoir avec un chevauchement supérieur du côté éloigné de l'articulation que du côté proche de l'articulation.

2. Pince selon la revendication 1, **caractérisée en ce que** suivant la direction longitudinale de la pince (1), le chevauchement des deuxièmes lames de coupe (14, 15) passe par un minimum.

3. Pince selon l'une des revendications précédentes, **caractérisée en ce que** l'une des premières lames (10, 11) ou les deux sont formées avec une ou plusieurs échancrures de dénudage.

4. Pince selon l'une des revendications précédentes, **caractérisée en ce que** dans la position fermée de la pince, les premières lames (10, 11) passent l'une sur l'autre à la façon de ciseaux de préférence en exceptant la zone d'une échancrure de dénudage.

5. Pince selon l'une des revendications précédentes, **caractérisée en ce qu'**en plus des zones de travail à lames de coupe, la pince (1) présente en outre des zones de travail additionnelles telles que des zones de prise, d'ovales dentées de prise ou de dénudage.

6. Pince selon l'une des revendications précédentes, **caractérisée en ce que** des zones de travail additionnelles sont agencées du côté vers les mâchoires par rapport aux zones de travail formant les premières lames de coupe (10, 11).
